# EUROPEAN PATENT APPLICATION

(11) **EP 4 282 573 A1**
(43) Date of publication of application: **29.11.2023**
(21) Application number: 23174480.6
(22) Date of filing: 22.05.2023
(51) Int. Cl.: B23K 26/00, B23K 26/082, B23K 26/08, B23K 26/352, B23K 31/10, B23K 26/0622, C09J 5/02, B23K 101/00

(54) **LASER SURFACE TREATMENT METHOD AND LASER SURFACE TREATMENT STATION**

(30) Priority: 23.05.2022 CN 202210562153
(71) Applicant: Nio Technology (Anhui) Co., Ltd, Hefei City, Anhui 230611 (CN)
(72) Inventor: GAO, Liang, Hefei City, Anhui (CN); WANG, Boyu, Hefei City, Anhui (CN); LI, Shuo, Hefei City, Anhui (CN); SONG, Weijia, Hefei City, Anhui (CN); CUI, Yongrui, Hefei City, Anhui (CN); BAI, Yunling, Hefei City, Anhui (CN); SHI, Chunmei, Hefei City, Anhui (CN); LIU, Yunfei, Hefei City, Anhui (CN); LIU, Huachu, Hefei City, Anhui (CN)
(74) Representative: Vossius & Partner Patentanwälte Rechtsanwälte mbB

(57) **Abstract**

The disclosure provides a laser surface treatment method and a laser surface treatment station. The laser surface treatment method is applied to a surface to be adhesively bonded (21) of a casting (2) of a vehicle body-in-white part, wherein the laser surface treatment method comprises the following steps: S 1: providing the casting (2) of the vehicle body-in-white part, the casting (2) having been demolded and machined; and S2: performing laser surface treatment on the surface to be adhesively bonded (21) of the casting (2), the surface to be adhesively bonded (21) being used for a subsequent adhesive application process for connection of the casting (2), wherein the laser surface treatment is carried out by pulse laser, and the laser surface treatment employs the following parameters: an average laser power greater than 500 W; a laser frequency ranging from 5 kHz to 10 kHz; and laser single-point energy greater than 50 mJ.

## Description

### Technical Field

The disclosure relates to the field of laser cleaning of castings, and in particular relates to a laser surface treatment method and a laser surface treatment station.

### Background Art

With the emergence of new technological trends such as lightweight, electrification and intelligence in the automobile industry, the concept of integrated design is presented in the design and manufacture process of an automobile body-in-white in order to improve the design and manufacture efficiency and the capability of systematization. The application of increasingly large-sized structural castings in the design of a body structure is exactly an example. Due to the need for an adhesive bonding process, surface treatment is required for a casting to ensure the adhesive bonding strength and the corrosion resistance of an adhesively bonded surface. A traditional surface treatment process for castings generally adopts a titanium-zirconium coating, and this process requires a surface treatment line with a large footprint. Such a line not only contaminates the environment, but also increases the cost of surface treatment as the size of a part increases. Meanwhile, surface treatment on large-sized castings may be technically difficult. The problem of environmental contamination of the treatment solution employing the titanium-zirconium coating mismatches the current development trend of industry.

### Summary

An object of the disclosure is to solve the problems of high pollution, high cost and high technical difficulty of the titanium-zirconium coating process, and to ensure the ideal laser treatment efficiency, energy and effect.

In addition, the disclosure also aims to solve or alleviate other technical problems existing in the prior art.

The disclosure solves the above problems by providing a laser surface treatment method and a laser surface treatment station. Specifically, according to one aspect of the disclosure, provided is:
a laser surface treatment method for a surface to be adhesively bonded of a casting of a vehicle body-in-white part, wherein the laser surface treatment method comprises the following steps:
   S 1: providing a casting of a vehicle body-in-white part, the casting having been demolded and machined; and
   S2: performing laser surface treatment on the surface to be adhesively bonded of the casting, the surface to be adhesively bonded being used for a subsequent adhesive application process for connection of the casting,
wherein the laser surface treatment is carried out by pulse laser, and the laser surface treatment employs the following parameters:
an average laser power greater than 500 W;
a laser frequency ranging from 5 kHz to 10 kHz; and
laser single-point energy greater than 50 mJ.

Optionally, according to an embodiment of the disclosure, the laser surface treatment further employs one or more of the following parameters:
a laser pulse width ranging from 50 ns to 70 ns;
a laser moving speed greater than 5,000 mm/s;
a distance of 0.5 mm to 1 mm between centers of adjacent laser spots;
the laser spot being a square with a diagonal length greater than 0.8 mm or a circle with a diameter greater than 0.8 mm; and
a coincidence ratio of any adjacent laser spots being greater than 18%.

Optionally, according to an embodiment of the disclosure, the laser surface treatment is only performed on the surface to be adhesively bonded.

Optionally, according to an embodiment of the disclosure, the laser moving speed ranges from 5,000 mm/s to 6,000 mm/s, and the coincidence ratio of the laser spots is 20% to 30%, such that the surface to be adhesively bonded forms a honeycomb porous microstructure after being subjected to the laser surface treatment.

Optionally, according to an embodiment of the disclosure, the casting is a rear bottom plate assembly, a cabin torque box and torque beam integrated casting or a casting of an upper body part.

Optionally, according to an embodiment of the disclosure, the casting is an aluminum alloy die casting.

According to another aspect of the disclosure, the disclosure provides a laser surface treatment station for a surface to be adhesively bonded of a casting of a vehicle body-in-white part. The laser surface treatment station is used for one of the above-mentioned laser surface treatment methods. The laser surface treatment station comprises a laser with a laser head, and an industrial robot. A laser beam emitted from the laser head can be directed onto the surface to be adhesively bonded of the casting.

The laser head is mounted on the industrial robot and can be driven by the industrial robot, or the laser head is fixedly arranged and the industrial robot is used for mounting and driving the casting.

Optionally, according to an embodiment of the disclosure, the laser further comprises two galvanometers. The two galvanometers are arranged within the laser head for adjusting a laser path in different directions.

The laser surface treatment method and the laser surface treatment station provided have the following beneficial effects: 1) an adhesion test on a surface treated by the treatment process according to the disclosure shows that the adhesive bonding strength, the stability and the corrosion resistance are superior to those of a treatment solution in the prior art; 2) the cost of surface treatment is reduced from about 70 yuan per vehicle in the prior art to about 7 yuan; 3) the energy consumption in the manufacturing process is greatly reduced, and the device power is reduced from over 300 kW to about 7 kW; 4) the manufacturing process is more environmentally friendly, and there is almost no waste discharge; and 5) the footprint is smaller.

### Brief Description of the Drawings

The foregoing and other features of the disclosure will become apparent with reference to the accompany drawings, in which:
FIG. 1 is a schematic flowchart of a laser surface treatment method according to the disclosure;
FIG. 2 is a schematic design diagram of a laser surface treatment station according to the disclosure; and
FIG. 3 is a schematic design diagram of another laser surface treatment station according to the disclosure.

### Detailed Description of Embodiments

It can be readily understood that according to the technical solution of the disclosure, a person of ordinary skill in the art may propose multiple interchangeable structures and implementations without changing the essential spirit of the disclosure. Therefore, the following specific embodiments and the accompanying drawings are merely exemplary descriptions of the technical solutions of the disclosure, and should not be construed as the entirety of the disclosure or construed as limiting the technical solution of the disclosure.

Orientation terms, such as up, down, left, right, front, rear, front side, back side, top, and bottom, which are or may be mentioned in this description, are defined with respect to the structures shown in the accompanying drawing, and are relative concepts, and therefore may correspondingly vary depending on different positions and different usage states. Therefore, these or other orientation terms should not be construed as restrictive terms as well. Moreover, the terms such as "first" "second", "third" or similar expressions are only used for description and distinction purposes, and should not be construed as indicating or implying the relative importance of corresponding members.

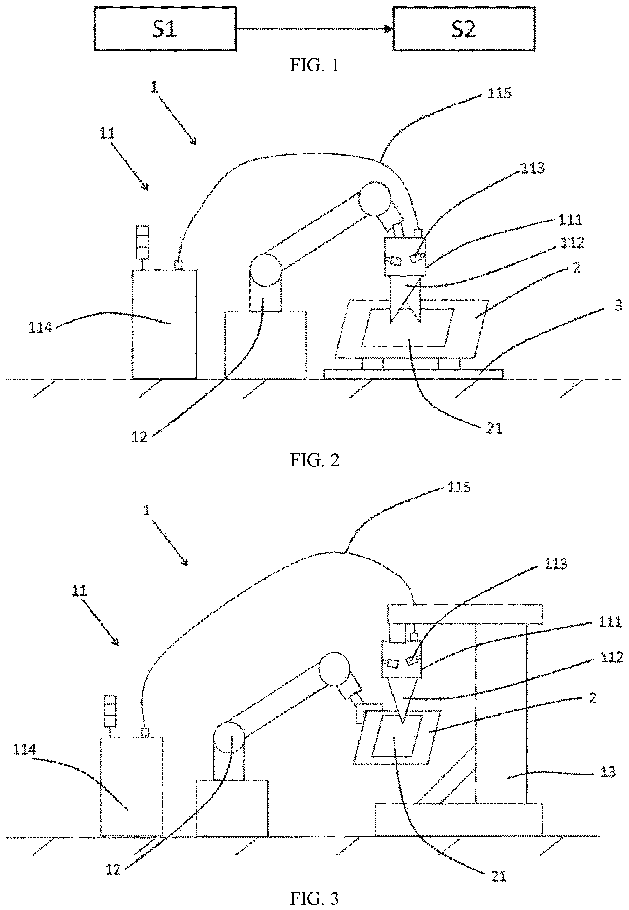

A reference is made to FIG. 1, which is a schematic flowchart of a laser surface treatment method according to the disclosure.

The laser surface treatment method is applied to a surface to be adhesively bonded 21 of a casting 2 of a vehicle body-in-white part. The laser surface treatment method comprises the following steps:
S 1: providing the casting 2 of the vehicle body-in-white part, the casting 2 having been demolded and machined; and
S2: performing laser surface treatment on the surface to be adhesively bonded 21 of the casting 2, the surface to be adhesively bonded 21 being used for a subsequent adhesive application process for connection of the casting 2,
wherein the laser surface treatment is carried out by pulse laser, and the laser surface treatment employs the following parameters:
   an average laser power greater than 500 W;
   a laser frequency ranging from 5 kHz to 10 kHz; and
   laser single-point energy greater than 50 mJ.

It should be understood that body in white is not a strict limitation on the color of a vehicle body, but covers an assembly of structural parts and covering parts of the vehicle body, and it may be a vehicle body that has been assembled (e.g., in welded connection) but not painted. Therefore, the body-in-white part should be a broadly understood term that may cover various structural parts and covering parts of the vehicle body. In this method, a casting of the vehicle body-in-white part has been demolded and machined (e.g., turned, milled, pressure machined) and thus has been substantially formed into the final shape of the corresponding part. However, a previous casting process requires surface treatment for use in a subsequent adhesive bonding process. The adhesive bonding process or adhesive application process is used for connecting the surface-treated casting with other relevant parts, such as stamped aluminum, steel sheets, extruded aluminum profiles, or even non-metallic parts. Here, a surface of the casting, that is to be adhesively bonded in the subsequent adhesive bonding process (e.g. for connection with the relevant parts mentioned above), is called a surface to be adhesively bonded. For example, the casting 2 may be a large-scale integrated casting of the body in white, such as a rear bottom plate assembly (an integrated casting that integrates a longitudinal beam bottom plate and part of a wheel arch), a cabin torque box and torque beam integrated casting, and a large-scale casting of the upper body part. An aluminum alloy die casting may be selected as its material.

According to the technical solution of the method, surface treatment is performed on the surface to be adhesively bonded 21 of the casting 2 by laser instead of the titanium-zirconium coating process in the prior art, thus overcoming the shortcomings that a surface treatment line has a large footprint, causes environmental contamination, and has a high cost in surface treatment and a high technical difficulty in surface treatment of large-sized castings. At the same time, the use of laser surface treatment can cause instantaneous evaporation or peeling of dirt, rust spots or coatings on the surface, quickly and effectively removing contaminants or coatings from the surface. This method is a kind of dry cleaning, which requires no organic solvents, discharges no waste liquid, causes less residues and no environmental contamination, and can effectively remove dirt adsorbed on the surface of an object that is difficult to remove by other methods, for example, submicron particles. This technology is highly flexible and controllable, easy to locate a selected area for precision treatment, and easy to treat hard-to-reach or dangerous places by remote control. In particular, laser energy is used to ablate the surface of the casting, such that a new denser oxide layer of which the thickness may range from dozens of nanometers to several microns according to parameters is formed in an ablated area while original oil, residues of a release agent and an original loose oxide layer are removed from the surface of the part. Owing to the presence of the new dense oxide layer, the corrosion resistance of the laser-treated surface is improved, and thus the corrosion resistance after adhesive bonding is greatly improved. The laser-treated casting is adhesively bonded, and then, a neutral salt spray test is conducted on an adhesively bonded sample for more than 500 hours, after which it is found that there is no significant decrease in the adhesive bonding strength. Therefore, compared with the prior art, the laser surface treatment method according to the disclosure possesses prominent substantive features and represents a notable progress.

In this embodiment, pulse laser, for example, high-power pulse laser, is used for the laser surface treatment, such that the problems of high contamination, high cost and high technical difficulty of the titanium-zirconium coating process can be solved on the premise of ensuring the adhesive bonding strength. It should be understood that pulse laser refers to a laser that emits laser in a pulsed mode, and the pulsed mode is a mode that works at regular intervals. Therefore, the surface treatment is carried out by means of laser "spotting". Pulse laser has a high output power and is thus suitable for laser marking, cutting, ranging, etc.

In addition, the average laser power greater than 500 W is used for achieving the desired treatment efficiency. The laser frequency ranging from 5 kHz to 10 kHz is a high frequency for ensuring the treatment efficiency of more than 4,000 mm²/s to meet the beat requirement, and at the same time, the frequency will not be too high, so as not to cause the pulse energy to drop. The laser single-point energy greater than 50 mJ is intended to achieve the required laser treatment effect. It should be understood that the average laser power = laser frequency * single-point energy. Through the combination of the above three parameters, laser cleaning may be conducted easily to ensure the cleaning efficiency and the cleaning effect. Optionally, a pulse single-point peak power ranging from a dozen of kilowatts to several hundreds of kilowatts may be chosen. A higher pulse single-point peak power can ensure an ideal single-point cleaning effect and an ideal single-point cleaning depth, thus improving the cleanliness.

In some embodiments, the laser surface treatment may further employ one or more of the following parameters:
a laser pulse width ranging from 50 ns to 70 ns, related to the pulse energy and ensuring a large energy density of a laser beam and thus a sufficient ablation depth on the surface of the casting 2;
a laser moving speed greater than 5,000 mm/s to ensure that the laser treatment efficiency of more than 4,000 mm²/s can be achieved;
a distance of 0.5 mm to 1 mm between centers of adjacent laser spots to ensure both of the laser treatment effect and the required efficiency;
the laser spot being a square with a diagonal length greater than 0.8 mm or a circle with a diameter greater than 0.8 mm, which may be called a large light spot for achieving the required treatment efficiency; and
a coincidence ratio of any adjacent laser spots being greater than 18%, this parameter being a minimum value for achieving non-missing surface treatment.

It should be understood that a laser line refers to a line formed by a series of laser spots hitting the surface of the casting. The coincidence of the laser spots means that the laser spots hitting the surface of the casting are not completely separated from one another, but are somewhat overlapping. In addition, the laser moving speed refers to the speed at which the laser spots move or "travel" across the surface of the casting.

Optionally, the laser surface treatment is only performed on the surface to be adhesively bonded 21, while the rest is left untreated. According to the technical solution in the prior art, an entire part needs to be covered with a titanium-zirconium coating. Therefore, the technical solution of the disclosure has the advantage of greatly saving the treatment time and reducing the money cost, especially in the case of some castings with complicated shapes in some surface areas.

In addition, through optimization of a series of parameters, for example, different coincidence ratios of the laser spots may produce different micro-morphologies, which may change the roughness of the laser-treated areas, thus improving the shearing strength of the adhesively bonded surface to some extent. For example, the surface to be adhesively bonded 21 forms a honeycomb porous microstructure after being subjected to the laser surface treatment. The honeycomb porous microstructure can improve the surface energy of the adhesively bonded surface, thus ensuring the adhesive bonding effect. Here, the laser moving speed ranges from 5,000 mm/s to 6,000 mm/s, and the coincidence ratio of the laser spots ranges from 20% to 30%.

References are made to FIGS. 2 and 3, which are respectively schematic design diagrams of one and another laser surface treatment station according to the disclosure.

A laser surface treatment station 1 is used for a surface to be adhesively bonded 21 of a casting 2 of a vehicle body-in-white part. The laser surface treatment station 1 is used for one of the above-mentioned laser surface treatment methods. The laser surface treatment station 1 comprises a laser 11 with a laser head 111, and an industrial robot 12. A laser beam 112 emitted from the laser head 111 can be directed onto the surface to be adhesively bonded 21 of the casting 2. The laser head 111 is mounted on the industrial robot 12 and can be driven by the industrial robot 12 (as in FIG. 2, at this time, the casting 2 may be clamped by means of a fixture 3), or the laser head 111 is fixedly arranged and the industrial robot 12 is used for mounting and driving the casting 2 (as shown in FIG. 3).

It should be understood that the specific implementation of the laser surface treatment station and its technical effects can be interpreted with reference to the previous descriptions of the laser surface treatment method. However, it should be added that the industrial robot 12 should be understood broadly, including not only a humanoid robot form, but also a mechanical arm, such as a six-axis mechanical arm. The industrial robot generally refers to a multi-joint manipulator or a multi-degree-of freedom machine that may be used in various industrial fields such as electronics, logistics and chemical industry. The industrial robot has a certain degree of automation and can realize various industrial processing and manufacturing functions depending on its own power energy and control capabilities. For example, as shown in the figures, the industrial robot 12 is a multi-axis multi-degree-of-freedom mechanical arm with an arm end for mounting a part to be mated. In FIG. 2, this end may be connected to the laser head 111 by means of a flange connection, and in FIG. 3, this end is constructed into or fitted with a grabber (e.g., a gripper) for grabbing and driving the casting 2. Further, exemplarily, the laser head 111 is connected to a laser body 114 by an optical fiber 115, and the laser body 114 is fixedly positioned.

In the embodiment shown in FIG. 3, the laser surface treatment station 1 may further comprise a support 13, and the support 13 is fixedly positioned and used for assembling the laser head 111 to provide a fixed mounting position for the laser head 111.

Also shown in these two figures is that the laser 11 further comprises two galvanometers 113, and the two galvanometers 113 are arranged within the laser head 111 for adjusting a laser path in different directions. It should be understood that the so-called galvanometer refers to a mirror that vibrates in operation by pivoting about a rotation axis, so that the galvanometer can reflect the incident laser beam and control the angle of this reflection at the same time. In the case that the two galvanometers 113 are provided, the reflection of the laser beam can be controlled on a two-dimensional level, i.e., the laser path can be adjusted on the two-dimensional level, thus enabling laser treatment on the entire surface plane of the casting 2. A combination of the galvanometers may also be referred to as a two-dimensional highspeed galvanometer due to the typically high speed of the galvanometer 113.

In practice, a wider range of laser treatment may be realized with movement of the robot. Specifically, there may be various ways to realize the surface treatment, one of which is that the galvanometer reciprocates in a single-axis mode, and the industrial robot replaces one axis motion of the galvanometer to complete the surface treatment. The other way is to work in a "flying" mode, i.e., the galvanometer treats, in a 2-dimensional mode, the surface to be adhesively bonded, while the robot moves with the laser head, and a laser head controller acquires motion information of the robot in real time to control a scanning parameter of the galvanometer and to ensure the coincidence ratio of the light spots.

It should be noted that actually, the surface to be adhesively bonded is not necessarily flat, but may also be non-flat. Especially in the latter case, during the surface treatment with the laser head driven by the robot, it is found through an experiment that a defocus amount of ± 5 mm (i.e., the amount by which a focal deviates from a surface to be treated) may not have much influence on a test result.

In summary, this solution differs from the prior art in the following aspects.
1) The original titanium-zirconium technical solution requires a complete surface treatment line, comprising high-temperature pickling, alkali washing, ultrasonic cleaning and multi-pass water washing, and then technological requirements for titanium-zirconium treatment, drying and the like are met. However, the laser treatment solution may have only one station and only one procedure of laser treatment.
2) The original titanium-zirconium technical solution causes acid mist pollution, produces acidic, alkaline and other wastewater, involves cost in sewage treatment, and contaminates the environment, and an acid mist environment is harmful to devices and people. However, the laser treatment solution only produces a small amount of dust that may be collected and treated by a small dust removal device, almost does not contaminate the environment, involves no cost in pollution treatment, and hence is an environment-friendly process.
3) Cost comparison: for a large-scale casting like a rear bottom plate, the cost of titanium-zirconium treatment is about 70 RMB, while the cost of laser cleaning is about one-tenth thereof.
4) Energy consumption: the original titanium-zirconium production line requires a lot of energy to heat a bath liquid and to transport parts, and the whole line needs to run 24 hours a day, consuming more than 300 kW of power, whereas with laser treatment, the power of a single workstation is less than 10 kW, allowing for significant savings in energy consumption.

It should be understood that all of the above preferred embodiments are exemplary rather than limiting, and any modification or variation made by those skilled in the art to the specific embodiments described above without departing from the concept of the disclosure shall fall within the scope of legal protection of the disclosure.

## Claims

1. A laser surface treatment method for a surface to be adhesively bonded (21) of a casting (2) of a vehicle body-in-white part, wherein the laser surface treatment method comprises the following steps:
S 1: providing the casting (2) of the vehicle body-in-white part, the casting (2) having been demolded and machined; and
S2: performing laser surface treatment on the surface to be adhesively bonded (21) of the casting (2), the surface to be adhesively bonded (21) being used for a subsequent adhesive application process for connection of the casting (2),
wherein the laser surface treatment is carried out by pulse laser, and the laser surface treatment employs the following parameters: an average laser power greater than 500 W;
a laser frequency ranging from 5 kHz to 10 kHz; and
laser single-point energy greater than 50 mJ.

2. The laser surface treatment method according to claim 1, wherein the laser surface treatment further employs one or more of the following parameters:
a laser pulse width ranging from 50 ns to 70 ns;
a laser moving speed greater than 5,000 mm/s;
a distance of 0.5 mm to 1 mm between centers of adjacent laser spots;
the laser spot being a square with a diagonal length greater than 0.8 mm or a circle with a diameter greater than 0.8 mm; and
a coincidence ratio of any adjacent laser spots being greater than 18%.

3. The laser surface treatment method according to claim 1 or 2, wherein the laser surface treatment is only performed on the surface to be adhesively bonded (21).

4. The laser surface treatment method according to claim 2 or 3, wherein the laser moving speed ranges from 5,000 mm/s to 6,000 mm/s, and the coincidence ratio of the laser spots is 20% to 30%, such that the surface to be adhesively bonded (21) forms a honeycomb porous microstructure after being subjected to the laser surface treatment.

5. The laser surface treatment method according to any one of claim1 1 to 4, wherein the casting (2) is a rear bottom plate assembly, a cabin torque box and torque beam integrated casting or a casting of an upper body part.

6. The laser surface treatment method according to any one of claims 1 to 5, wherein the casting (2) is an aluminum alloy die casting.

7. A laser surface treatment station (1) for a surface to be adhesively bonded (21) of a casting (2) of a vehicle body-in-white part, wherein the laser surface treatment station (1) is used for the laser surface treatment method according to any one of claims 1 to 6, wherein the laser surface treatment station (1) comprises a laser (11) with a laser head (111), and an industrial robot (12), a laser beam (112) emitted from the laser head (111) can be directed onto the surface to be adhesively bonded (21) of the casting (2),
the laser head (111) is mounted on the industrial robot (12) and is drivable by the industrial robot (12), or the laser head (111) is fixedly arranged and the industrial robot (12) is used for mounting and driving the casting (2).

8. The laser surface treatment station (1) according to claim 7, wherein the laser (11) further comprises two galvanometers (113), the two galvanometers (113) being arranged within the laser head (111) for adjusting a laser path in different directions.
